(19) Europäisches Patentamt / European Patent Office / Office européen des brevets

(11) **EP 4 372 342 A1**

(12) **EUROPEAN PATENT APPLICATION**

(43) Date of publication:
**22.05.2024 Bulletin 2024/21**

(21) Application number: **22207466.8**

(22) Date of filing: **15.11.2022**

(51) International Patent Classification (IPC):
**G01K 3/00** *(2006.01)*     **G01K 7/01** *(2006.01)*
**G01K 15/00** *(2006.01)*

(52) Cooperative Patent Classification (CPC):
**G01K 15/005; G01K 3/005; G01K 7/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Tridonic GmbH & Co. KG**
**6851 Dornbirn (AT)**

(72) Inventors:
- **Romano, Fabio**
  **6850 Dornbirn (AT)**
- **Succavini, Lukas**
  **6850 Dornbirn (AT)**
- **Kucera, Clemens**
  **6850 Dornbirn (AT)**
- **Stark, Stefan**
  **6850 Dornbirn (AT)**
- **Auer, Hans**
  **6850 Dornbirn (AT)**

(74) Representative: **Beder, Jens**
**Mitscherlich PartmbB**
**Patent- und Rechtsanwälte**
**Karlstraße 7**
**80333 München (DE)**

(54) **TEMPERATURE SENSOR CALIBRATION FOR ELECTRONIC DEVICES**

(57) A calibration method for a temperature sensor of an electronic device, wherein the electronic device comprises a temperature sensor, an electronic circuit configured to emit a predetermined amount of heat, and a control circuit. The method comprises steps of determining (Si) a first parameter value of a parameter of the electronic device that is representative for a first temperature of the electronic device; controlling (S2, S3), by the control circuit, the electronic circuit to emit the predetermined amount of heat for a predetermined time; determining (S4) a second parameter value of a parameter of the electronic device that is representative for a second temperature of the electronic device after the predetermined time has elapsed, calculating (S5), by the control circuit a gradient based on the determined first parameter value, the determined second parameter value, the first temperature and the second temperature, and determining a gain error based on the calculated gradient.

START
→ DETERMING PARAMETER VALUE (FIRST PARAMETER VALUE) — S1
→ CONNECTING ELECTRONIC DEVICE WITH LOAD RESISTANCE — S2
→ WAITING UNTIL PREDETERMINED TIME HAS ELAPSED — S3
→ DETERMINING PARAMETER VALUE (SECOND PARAMETER VALUE) — S4
→ CALCULATING GRADIENT — S5
→ CALCULATING GAIN ERROR — S6
→ DETERMINING OFFSET ERROR — S7
→ STORING DETERMINED ERROR(S) — S8
→ END

FIG. 1

**Description**

The invention concerns the field of temperature measurement in electronics and specifically calibration of temperature sensors in electronic devices. A method for calibrating a temperature sensor, an electronic device, e.g. an integrated circuit including a temperature sensor, a system comprising the electronic device, and a driver device for building automation systems, in particular for lighting systems is presented.

A device temperature of an electronic device is a technical parameter, which may require monitoring during operation of the electronic device. Electronic devices operate usually according to their specifications within predefined temperature ranges. Operations outside the predefined operational temperature ranges may in case of excessive temperatures may cause damage to the electronic device or other devices. Temperatures of the electronic device above certain temperature thresholds may also indicate a malfunction of the electronic device. Contemporary electronic circuits, integrated circuits, e.g. including microcontrollers or application specific integrated circuits (ASICs) are typical examples for electronic devices, which regularly include temperature sensors in order to measure a temperature of the electronic circuits.

The temperature sensor may provide an analogue voltage, whose current voltage value depends on the current temperature of the temperature sensor. The analogue voltage provided by the temperature sensor is fed to an input of an internal analogue-to-digital converter (ADC) circuit, which generates and outputs a digital value based on the analogue voltage provided by the temperature sensor. Known microcontroller circuits not only may include the temperature sensor, but regularly also include one or more ADC circuits. The microcontroller may then process the digital value that corresponds to the sensed temperature further. Further processing of the digital value may include comparing the digital value with a predetermined threshold in order to determine based on the result of the comparison, whether the sensed temperature is within a temperature range for which the microcontroller may operate without suffering damage or without providing unreliable results.

Generally, the temperature sensor requires a calibration in order to provide temperature measurements with a sufficient accuracy for a specific application. Calibration refers to a comparison of measurement values, here a temperature values, with a calibration standard of known accuracy. Based on the result of the comparison, either no significant error is noted, or a significant error is noted, and an adjustment may be made to correct the error to a level of sufficient accuracy. Thus, the comparison performed during a calibration process may provide a correction parameter to adjust measurement values in order to obtain corrected measurement values of a sufficient accuracy for an application.

The calibration process may provide calibration parameters for two types of errors: an offset error and a gain error.

Calibrating the temperature sensor with regard to the offset error may be done by a simple and well established calibration process. During the calibration process, the microcontroller operates under predefined conditions, e.g. including exposure to a known temperature, and determining the corresponding digital value provided by the ADC circuit in response to the predefined conditions determined. Generally, the calibration process involves an electronic device including the microcontroller operating in standby, for example the microcontroller having ambient temperature, e.g. a temperature value of 25 °C. Based on the obtained digital value, a calibration parameter for correcting the offset error in the digital value and the corresponding temperature value can be determined. The calibration parameter for correcting the determined offset error maybe stored in a memory of the microcontroller and used during subsequent temperature measurements.

More advanced temperature sensors may undergo a more complex calibration process, which includes determining the gain error in addition to the offset error. For determining the gain error, the temperature sensor is heated to a (second) temperature, e.g. a second temperature value of 85 °C. Based on an obtained second digital value corresponding to the second temperature value, and the obtained first digital value at the first temperature value, a calibration parameter for the correcting the gain error for a curve describing a linear correspondence between the digital value and the corresponding temperature value can be determined. The calibration parameter for the determined gain error may be stored in a memory of the microcontroller. However, a calibration process including determining the gain error is significantly more complex and, in particular, more time consuming, e.g. due to the required heating process between the two calibration points (upper and lower calibration point, adjustment points, balance points) and more complex calibration setup including additional and more advanced measurement equipment. Temperature sensors with a high accuracy over a large temperature range require calibrating the gain error in addition to the offset error. Nevertheless, the increased accuracy involves high cost, e.g. due to the significant more complex calibration process for the temperature sensor.

Calibration processes for temperature sensors of electronic devices may therefore be subject to improvement addressing the aforementioned issues of calibrating temperature sensors at competitive cost.

The calibration method for a temperature sensor of an electronic device, the electronic device, the system and the driver device according to the independent claims provide advantageous solutions to the aforementioned problem.

The dependent claims define further advantageous embodiments.

The calibration method for a temperature sensor of an electronic device according to the first aspect has the electronic device comprising a temperature sensor, an electronic circuit configured to emit a predetermined amount of heat, and a control circuit. The method comprises steps of determining a first parameter value of a parameter of the electronic device that is representative for a first temperature of the electronic device; controlling, by the control circuit, the electronic circuit to emit the predetermined amount of heat for a predetermined time; determining a second parameter value of a parameter of the electronic device that is representative for a second temperature of the electronic device after the predetermined time has elapsed, calculating, by the control circuit a gradient based on the determined first parameter value, the determined second parameter value, the first temperature and the second temperature, and determining a gain error based on the calculated gradient.

The method for calibrating a temperature sensor of an electronic device uses the self-heating characteristics of the temperature sensor and/or electronic device for performing the calibration at least two calibration points at differing temperatures. The calibration method provides a gain error correction of the temperature sensor without requiring additional sensors or other auxiliary devices for performing the calibration process. The temperature sensor performs the calibration method based on its own structural features and on its own integrated capabilities. The calibration process determines correction parameters as part of the calibration process. The method does not require an indirect computation of correction coefficients for the offset error and the gain error, but relies on a targeted heating of the temperature sensor itself using the known circuit losses and self-heating within the temperature sensor and/or electronic circuit of the electronic device. The calibration method performs calculating the second temperature for the second calibration point after the targeted and intended heating of the electronic circuit occurred.

Performing the calibration method according to the first aspect provides a significant increase in temperature measurement accuracy of the temperature sensor integrated with the electronic device. The increased temperature measurement accuracy enables to shift thresholds for switching the electronic device of due to reaching temperature threshold values closer to an absolute threshold value. This increases an overall temperature range in which the electronic device may operate significantly without having to change a design of the electronic circuit.

The whole calibration process provides a calibration for the offset error and additionally the gain error, and therefore provides measured temperature values with high accuracy for lowcost due to the calibration process according to the first aspect.

The calibration method according to an embodiment comprises controlling the electronic circuit of a representative electronic device of a same type of the electronic device at the first temperature to emit the predetermined amount of heat for the predetermined time, and determining for the representative electronic device, the second temperature after the predetermined time elapsed.

The calibration method may further comprise storing, in the control circuit of the electronic device, the determined second temperature determined for the representative electronic device.

The calibration method according to one embodiment may comprise at least one of determining the predetermined time based on the second temperature having a predetermined first minimum temperature difference to the first temperature, determining the predetermined time based on the second temperature being within a predetermined second minimum distance to a maximum rated temperature of the electronic device, and determining the predetermined time based on the second temperature corresponding to a predetermined temperature threshold for a preventive shutdown of the electronic device.

According to an embodiment of the calibration method, the calibration method is performed during or immediately after manufacturing the electronic device.

The calibration method according to one embodiment is performed repeatedly in predetermined time intervals.

According to an embodiment, the calibration method is performed when switching the electronic device on.

The calibration method according to one embodiment comprises controlling, by the control circuit, a switch to connect an output of a voltage regulator circuit of the electronic circuit via a load resistor to ground for the predetermined time.

According to an embodiment, the calibration method further comprises determining an offset error based on the first parameter value.

The calibration method according to one embodiment further comprises storing the determined offset error in a memory of the electronic device.

The calibration method may, according to one embodiment, further comprise storing the determined gain error in a memory of the electronic device.

A computer program according to the second aspect comprises instructions, which, when a computer or microprocessor executes the program, cause the computer or microprocessor to carry out the method of any one of the embodiments of the method according to the first aspect.

An electronic device according to the third aspect comprises a temperature sensor configured to output a parameter value that corresponds to a current temperature value of a temperature of the electronic device, an electronic circuit configured to emit a predetermined amount of heat; and a control circuit configured to determine a first parameter value of a parameter of the electronic device that is representative for a first temperature of the electronic device. The control circuit is further configured to control the electronic circuit to emit the predetermined amount of heat for a predetermined time, to determine a second parameter value of a parameter of the electronic device that is representative for a second temperature of the electronic device after the predetermined time has elapsed, to calculate a gradient based on the determined first parameter value, the determined second parameter value, the first temperature and the second temperature, and to compute a gain error based on the calculated gradient.

The electronic device according to the third aspect may be an integrated circuit, in particular an application specific integrated circuit (ASIC).

A system according to the fourth aspect comprises the electronic device according to any one of the embodiments of the third aspect, and the system further comprises a load resistor and a switch configured to connect an output of the electronic device via the load resistor to ground and to disconnect the output of the electronic device from ground. The control circuit is configured to control the switch to connect the output electronic device via the load resistor to ground for the predetermined time.

A driver device for building infrastructure devices, in particular for lighting modules according the sixth aspect comprises at least one electronic device according to one of the embodiments of the fourth aspect, or at least one system according to the fifth aspect.

The following description of embodiments refers to the attached figures, in which

Fig. 1    displays a simplified flowchart of a calibration method for temperature sensor of an electronic device according to an embodiment;

Fig. 2    shows a schematic circuit diagram that illustrates a system including portions of the electronic device, together with a switch and a load resistor for calibrating the temperature sensor according to an embodiment;

Fig. 3    illustrates a temperature profile over time when performing the calibration method for calibrating the temperature sensor according to an embodiment;

Fig. 4    illustrates the calibration method for calibrating the temperature sensor; and

Fig. 5    illustrates a calibration method for calibrating the temperature sensor according to prior art.

In the figures denote same reference signs same or corresponding elements. The discussion of the figures omits a repetitive discussion of same reference signs for different figures wherever deemed possible without adversely affecting comprehensibility.

The embodiments concern temperature sensors. A temperature sensor provides a variable analogue voltage whose voltage value depends on a temperature value of a temperature, which the temperature sensor senses (measures, monitors). The temperature may be an ambient temperature of the environment of the temperature sensor. The temperature maybe a surface temperature of a structure on which the temperature sensor is mounted. The structure maybe a printed circuit board (PCB). The temperature maybe an ambient temperature in an enclosure in which the temperature sensor is located. The enclosure may be a housing (case, enclosure, body) of an electronic device that includes the temperature sensor.

Measuring the temperature using a microcontroller ($\mu$C) is a well-known concept. The microcontroller may read an digital value output by an analogue-to-digital converter (ADC, A/D-converter) driven by a thermistor-resistor voltage divider, analogue-output temperature sensor, or another analogue temperature sensor.

An ADC is an electronic circuit that converts an analogue signal, such as the analogue temperature signal provided by the temperature sensor or thermometer, into a digital signal. Available microcontrollers or ASICs may include one or plural ADC, that may be configured to provide an isolated electronic circuit that converts an analogue input voltage value or current value to a digital numerical value representing the magnitude of the voltage value or current value.

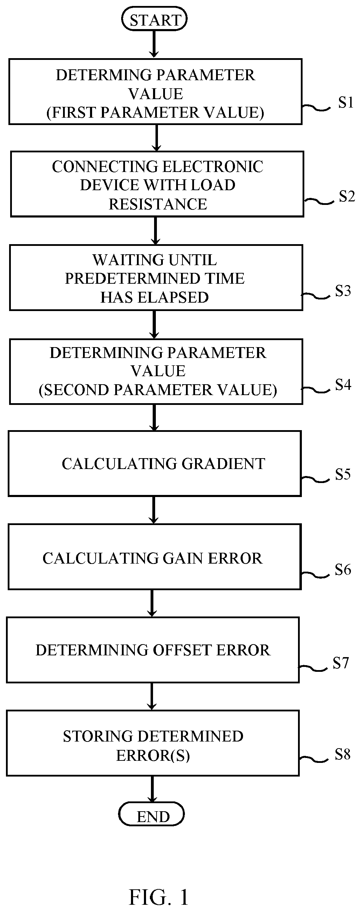

Fig. 1 displays a simplified flowchart of a calibration method for a temperature sensor 10 of an electronic device 1 according to an embodiment.

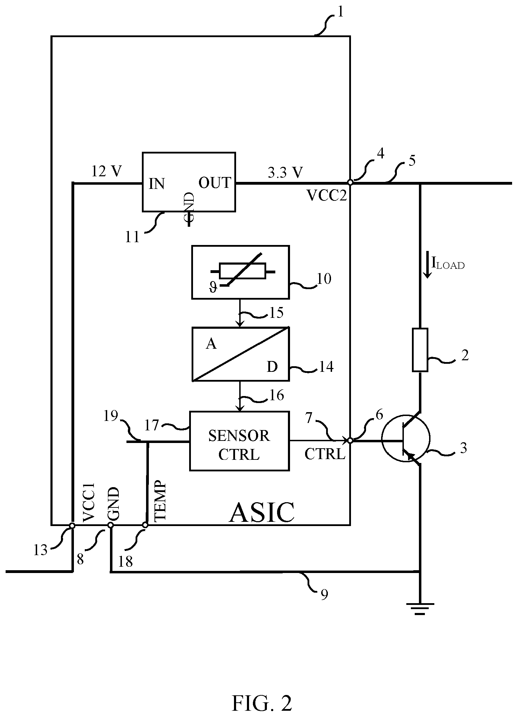

Embodiments of the electronic device 1 and its structural components will be discussed with reference to fig. 2.

The calibration method for an electronic device 1 performs a calibration of a temperature sensor 10 included in the electronic device 1. The electronic device 1 further comprises an electronic circuit 11 configured to emit a predetermined amount of heat, and a control circuit 17.

After a start, the method performs a step Si for determining a first parameter value of a parameter of the electronic device 1 that is representative for a first temperature $T_1$ of the electronic device 1.

The method proceeds with steps S2 and S3 of controlling by the control circuit 17, the electronic circuit 11 to emit the predetermined amount of heat for a predetermined time.

In particular, in step S2, the control circuit 17 generates a switch control signal 7 and outputs the switch control signal 7 to a switch 3. The switch 3 connects, based on the received switch control signal 7, an output 4 of an electronic circuit 11, e.g. a linear voltage regulator circuit 11, of the electronic device 1 via a load resistor 2 to a ground potential 9. Thus, the electronic circuit 11 generates and drives a load current $I_{LOAD}$ via the load resistor 2 and the closed switch 3. The electronic circuit 11 warms up, in particular emits a predetermined amount of heat due to circuit losses of the electronic circuit 11 associated with generating and outputting the load current $I_{LOAD}$.

The method waits in step S3 for a predetermined time $\Delta t$.

In particular, during step S3, the control circuit 17 proceeds in step S3 the switch control signal outputting the switch control signal 7 via the output 6 to the switch 3 for connecting maintaining the switch 3 in a conducting state in order to maintain the load current $I_{LOAD}$ through the resistor 2 at its predetermined current value.

The electric device 1 will increase its temperature during the predetermined time $\Delta t$ due to the predetermined amount of heat emitted by the electronic circuit 11 of the electronic device 1.

When the time $\Delta t$ has elapsed, the method proceeds to step S4.

In particular, for proceeding from step S3 to step S4, the control circuit 17 generates and outputs the switch control signal 7 to the switch 3 so that the switch 3 switches into a disconnected state (open state). In the disconnected state of the switch 3, the load current $I_{LOAD}$ through the resistor 2 ends, e.g. falls to a current of 0 A.

In step S4, the method proceeds by determining a second parameter value of a parameter of the electronic device 1 that is representative for a second temperature T2 of the electronic device 1 after the predetermined time $\Delta t$ has elapsed.

The second temperature T2 exceeds the first temperature $T_1$ due to the predetermined amount of heat emitted by the electronic circuit 11. The predetermined amount of heat may further include heat emitted by the load resistor 2 while the load current is driven through the load resistor 2.

In step S5 succeeding to step S4, the method proceeds by calculating a gradient based on the determined first parameter value from step S1, the determined second parameter value from step S4, the first temperature $T_1$ and the second temperature $T_2$.

In step S6 succeeding to step S5, the method proceeds by determining a gain error based on the calculated gradient from step S6

In step S7 succeeding to step S5, the method proceeds by computing an offset error based on the first temperature $T_1$ and the first parameter value determined in step S1.

Alternatively, the method may perform step S7 of computing the offset error at any point in time after step S1 and before step S8. In particular, the method may compute the offset error in parallel to any of the steps S2 to S7, e.g. while the method performs step S3.

In step S8 succeeding to steps S6 and S7, the method proceeds with storing the determined error values including the offset error and the gain error in a memory of the electronic device 1.

In particular, the method may store in step S8 a table including a set of corrected correspondence values, which describe a correspondence between each parameter value to one corresponding temperature value of the temperature T. The corrected correspondence values set of corrected correspondence values are corrected based on the computed offset error and gain error.

Fig. 2 shows a schematic circuit diagram that illustrates a system including portions of the electronic device 1, together with a switch 3 and a load resistor 2 for calibrating the temperature sensor 10 according to an embodiment.

The electronic device 1 may be a microprocessor, a microcontroller or another type of electronic circuit, e.g. an integrated circuit (IC) such as an ASIC.

The electronic device 1 may form part of an electronic circuit included in a driver device. Driver devices, e.g. driver devices providing load currents for supplying building automation may should devices such as lighting modules implemented using switched mode power supply (SMPS) circuits often include microcontroller or ASICs. Driver devices for building automation systems are employed in large numbers all over buildings and therefore represent a major cost driver in building automation systems.

Fig. 2 displays the electronic device 1 with those of its structural components, which play a role for discussing the embodiment.

The electronic device 1 comprises a temperature sensor 10, and ADC 14 and the control circuit 17. The electronic device 1 may arrange a plurality of temperature sensors 10, e.g. distributed over a printed circuit board (PCB), in the electronic device 1 and include respectively plural ADC 14 and control circuits 17.

The electronic device 1 comprises at least one electronic circuit, which in fig. 2 is shown as a linear voltage regulator circuit 11. The linear voltage regulator circuit 11 obtains a DC voltage VCC1, e.g. a low power supply voltage of 12 V, and generates a DC voltage VCC2, e.g. a power supply voltage of 3.3 V based on the obtained DC voltage VCC1.

The electronic device 1 comprises a plurality of external connections, which may include a voltage supply connection 13 for obtaining the DC voltage VCC1, a ground connection 8, and a low voltage power supply output connection 4.

The electronic circuit outputs the DC voltage VCC2 via the low voltage power supply output connection 4.

The embodiment depicted in fig. 2 shows a load resistor 2 and a switch 3 electrically connected in series between the low voltage power supply output connection 4 and the ground connection 8 of the electronic device 1. Together, the electronic device 1, the load resistor 2, and the switch 3 form a system, which facilitates calibration of the temperature sensor 10.

The control circuit 17 generates a switch control signal 7 and outputs the generated switch control signal 7 via a control output 6 of the electronic device 1 to the switch 3.

The switch control signal 7 may be a digital signal, whose signal amplitude is either at a high signal level (HIGH) or at a low signal level (LOW).

The switch 3 may be implemented based on a transistor, e.g. a bipolar junction transistor (BJT) or a field effect transistor (FET). In case of using a BJT as the switch 3, the switch control signal 7 maybe fed we are the control output 6 a base of the BJT.

In case of the switch control signal 7 having the high signal level, the switch 3 is in a conducting state and the electronic circuit 11 drives a load current $I_{LOAD}$ via the resistor 2 and the switch 3. in case of the switch control signal 7 having the low signal level, the switch 3 is in our non-conducting state, and the load current $I_{LOAD}$ is 0 (zero).

The resistor 2 may consist of one or of a plurality of resistor elements.

The resistor 2 and the switch 3 may be implemented using discrete electrical components arranged externally to the electronic device 1. Alternatively, at least one or both of the resistor 2 and the switch 3 may be implemented integrally with the electronic device 1.

A resistance value of the resistor 2 determines a current value of the load current $I_{LOAD}$.

Generating the load current $I_{LOAD}$ by the electronic circuit 11 inevitably involves circuit losses in the electronic circuit 11, which resulted in emitting heat by the electronic circuit 11. By controlling the load current $I_{LOAD}$ to a predetermined current value by selecting a fixed resistance value of the resistor 2, the amount of heat emitted by the electronic circuit 11 for generating the load current $I_{LOAD}$ is set to predetermined level. Therefore, the control circuit 17 is enabled to dissipate a predetermined amount of heat while the electronic circuit 11 by switching the switch 3 into a conducting state for a time $\Delta t$.

Emitting the predetermined amount of heat in the electronic device 1 will rise the temperature of the electronic device 1 from a first temperature $T_1$ to a second temperature T2 in a controlled manner, in particular on the control of the control circuit 17 based on the switch control signal 7.

A temperature difference $\Delta T$ between the first temperature $T_1$ and the second temperature T2 depends on the load current $I_{LOAD}$, the predetermined time $\Delta t$ during which the switch 3 is in a conducting state, and the capability of the electronic device 1 to dissipate the generated amount of heat provided that other conditions influencing a temperature of the electronic device 1 are constant.

The constant conditions for the electronic device 1 may be ensured by operating the electronic device one during the calibration process in a predefined state, e.g. in standby.

In the predefined state, for example, no variations for the current output at the low voltage power supply connection 4 except of a change in the predetermined load current $I_{LOAD}$ due to switching the switch 3 may occur.

The temperature sensor 10 senses a current temperature of the electronic device 1.

The temperature sensor 10 may, but is not limited to, a silicon-bandgap temperature sensor. The silicon-bandgap temperature sensor is common form of a temperature sensor used in electronic devices. The silicon bandgap temperature sensor can be included in a silicon-integrated circuit at low cost and is therefore an advantageous solution for the electronic device 1 being a microcontroller or ASIC.

A temperature sensor implemented based on semiconductor materials provides an electric parameter with a value proportional to an absolute temperature value. The electrical parameter maybe an analogue value or a digital value. Implementations of the semiconductor temperature sensor output an analogue voltage or a digital value.

A silicon-bandgap temperature sensor is a common form of a temperature sensor used in electronic devices 1. It can be included in a silicon-integrated circuit at low cost. The temperature sensor 10 uses the principle that a forward voltage of a silicon diode, which may be the base-emitter junction of a bipolar junction transistor (BJT), is temperaturedependent, according to the equation (1)

$$V_{BE} = V_{G0} \left(1 - \frac{T}{T_0}\right) + V_{BE0} \left(\frac{T}{T_0}\right) + \left(\frac{nkT}{q}\right) \ln \left(\frac{T_0}{T}\right) + \left(\frac{kT}{q}\right) ln \left(\frac{I_C}{I_{C0}}\right); \qquad (1)$$

with the temperature $T$ in Kelvin, $T_0$ a reference temperature, $V_{G0}$ the bandgap voltage at absolute zero, $V_{BE0}$ the junction voltage at the temperature $T_o$ and current $Ico$, $k$ represents the Boltzmann constant, q the elementary charge of an electron, and n a device-dependent constant. When comparing the two base-emitter junctions at a same temperature Tbut at two different currents $I_{C1}$ and $I_{C2}$, equation (1) is simplified to

$$\Delta V_{BE} = \left(\frac{kT}{q}\right) ln \left(\frac{I_{C1}}{I_{C2}}\right) ; \qquad (2)$$

and with $I_{c1} = N I_{C2}$, which may be forced by a respective electronic circuit design,

$$\Delta V_{BE} = \left(\frac{kT}{q}\right) ln(N); \qquad (3)$$

An electronic circuit, e.g. an ADC 14 configured to measure a voltage $\Delta V_{BE}$ may be used to calculate the temperature $T$. The result remains valid up to about 200 °C to 250 °C, when leakage currents become large and may corrupt the temperature measurement. The voltage difference $\Delta V_{BE}$ between two p-n junctions (e.g. diodes), operated at different current densities is proportional to the absolute temperature $T$.

The temperature sensor 10 may use either BJT or complementary metal-oxide-silicon (CMOS) transistors, which provide a sensor output signal in form of an analogue voltage 15 that changes dependent on a change in temperature T.

Basing the temperature sensor 10 on semiconductor technology may result in a restricted temperature range of the temperature sensor 10, e.g. for temperature ranges up to 140 °C or 150 °C.

The temperature sensor 10 outputs an analogue voltage 15, which corresponds to a current value of the sensed ambient temperature value. The temperature sensor 10 provides the analogue voltage 15 to the ADC 14. The ADC 14 generates a digital value 16 corresponding to the input analogue voltage 15 provided by the temperature sensor 10. The ADC 14 outputs the generated digital value 16 to the control circuit 17. The control circuit 17 may generate a digital temperature value 19 that corresponds to the sensed current value of the temperature T based on table of conversion parameters that link the digital values 16 provided by the ADC 14 to corresponding digital temperature values 19.

The table of conversion parameters requires calibration in order to provide digital temperature values 19 with a predefined accuracy.

The temperature sensor 10 may form part of a complete temperature monitoring system monitoring and digitizing the temperature implemented in form of an integrated electronic circuit. Such integrated temperature monitoring system may comprise an on-chip temperature sensor, e.g. a silicon-bandgap temperature sensor, the ADC 14 for converting the analogue voltage provided by the on-chip temperature sensor, e.g. a continuous analogue voltage output by the on-chip temperature sensor into a discrete digital representation of the analogue voltage corresponding to the acquired temperature reading up with a predefined resolution.

The ADC 14 may comprise a conventional successive approximation converter based around a capacitor DAC. The ADC 14 may provide the discrete value as a digitized output voltage provided by the on-chip temperature sensor to a temperature value register. The temperature value register outputs a respective temperature value corresponding to the obtained digital value to a serial bus interface for outputting the measured temperature value via a bus for further processing externally to the temperature sensor, e.g. in a microcontroller of the electronic device 1.

The temperature value register may form part of the control circuit 17. The temperature value register may use a quickly accessible storage location available to control circuit 17. Registers usually comprise of a small amount of fast storage for storing data.

Implementing the temperature sensor 10 as a semiconductor device, the temperature sensor 10 may include an on-chip temperature sensor and at least portions of a microcontroller. The microcontroller may be configured to correct the measured temperature values provided by the on-chip temperature sensor using correction parameters stored in a register or memory of the microcontroller.

The control circuit 17 may provide the generated digital temperature values 19 to other electric circuit elements of the electronic device 1. Alternatively or additionally, the control circuit 17 may provide the generated digital temperature values 19 via a temperature signal output 18 to other devices externally to the electronic device 1.

The temperature signal output 18 may output the digital value serially, for example using an I[2]C data bus

interface as temperature signal output 18.

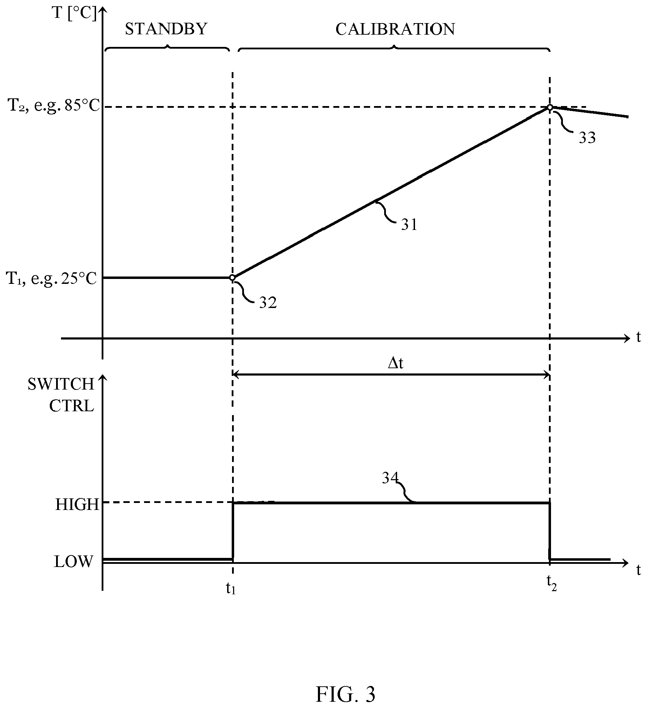

Fig. 3 illustrates aspects of a calibration process for the temperature sensor 10 according to an embodiment.

The term calibration (based on a definition of the International Bureau of Weights and Measures - abbreviated: BIPM) defines an operation or process that, under specified conditions, in a first step, establishes a relation between the quantity values with measurement uncertainties provided by measurement standards and corresponding indications with associated measurement uncertainties of the calibrated instrument or secondary standard. In a second step, the calibration process uses the information on the relation established in the first step to establish a relation for obtaining a measurement result from an indication.

Calibration of a temperature sensor 10 may be required or at least advantageous for providing measurements with a defined accuracy for different reasons. For example, a new temperature sensor requires calibration after manufacturing. After repairing or modifying an electronic device 1, a recalibration maybe necessary. The electronic device 1 may have been moved from one location to another location. A recalibration may be desirable or even necessary after a specified time period has elapsed since a previous run of the calibration process. A calibration of the temperature sensor 10 of the electronic device 1 may be required when a specified usage, e.g. in terms of operating hours, has occurred. Before and/or after a critical usage of the electronic device 1, calibration of the temperature sensor 10 of the electronic device 1 may be necessary. A calibration may be triggered by occurrence of a predefined event, for example after the electronic device 1 has been exposed to a shock, to vibration, or to physical damage, which might potentially have compromised the integrity of its calibration. A sudden change in environmental conditions to which the electronic device 1 is exposed may trigger a calibration of the temperature sensor 10 of the electronic device 1. A calibration temperature sensor 10 of the electronic device 1 maybe deemed advisable whenever observations concerning temperature appear questionable or temperature-related indications provided by temperature sensor 10 do not match an output of surrogate instruments. A calibration or re-calibration may be specified by a requirement, e.g., a requirement laid down in a customer specification or according to a device manufacturer recommendation.

Generally, calibration is often regarded as including the process of adjusting the output or indication on a measurement instrument to agree with a known value of the applied standard, within a specified accuracy. For example, a thermometer representing some kind of a temperature sensor 10, may be calibrated so that an error of indication or a calibration parameter is determined. The determined calibration parameter enables adjustment, e.g. via applying the determined calibration parameter (correction parameter, calibration constant) so that the calibrated thermometer shows the true temperature in, for example, Kelvin, Celsius, or Fahrenheit at specific points on a scale. However, few instruments are adjustable to match exactly the standards they are compared to over a wide range of values. Fig. 3 illustrates a temperature profile 31 over time t when performing the calibration method for calibrating the temperature sensor 10 according to the embodiment of fig. 1. Fig. 3 displays the temperature profile 31 in the upper portion of fig. 3 on a corresponding time scale with the switch control signal 7 in the lower portion of fig. 3. Fig. 3 shows the temperature profile 31 and the corresponding time profile 34 of the switch control signal 7 for one run of the sequence of steps Si to S8 of fig. 1, in particular while performing the steps Si, S2. S3 and S4. In the time up to time $t_1$, the electronic device 1 is in a standby state. In the standby state, the electronic device 1 is at a first temperature $T_1$. The first temperature $T_1$ may be a predetermined temperature, which corresponds to an ambient temperature of 25 °C. In the standby state, the switch 3 is closed, as the switch control signal 7 has a LOW value. At time $t_1$, the switch control signal 7 changes from the LOW value to a HGIH value, and thus the switch 3 closes and maintains the closed state for the predetermined time $\Delta t = t2 - t_1$. During the predetermined time $\Delta t$, the electronic circuit 11 maintains the load current $I_{LOAD}$ through the load resistor 3. The circuit losses, which the electronic circuit 11 experiences in order to maintain the load current $I_{LOAD}$ result in the electronic circuit 11 emitting the predetermined amount of heat, which gradually increases the temperature of the electric device 1 when proceeding from time $t_1$ to time $t_2$ while the predetermined time $\Delta t$ elapses.

When the time predetermined time $\Delta t$ has elapsed at the time $t_2$, the temperature of the electronic device 1 has increased to the second temperature $T_2$.

The second temperature $T_2$ may be a temperature that is close to, or essentially corresponds to an upper temperature limit of a temperature range in which the electronic device 1 is operating within its specifications.

The second temperature $T_2$ maybe close to or even correspond to a preset threshold temperature. When, during operation of the electronic device 1, an operating temperature T of the electronic device 1, which the temperature sensor 10 monitors, at least reaches or even exceeds the preset threshold temperature, the control circuit 17 may shut down the electronic device in order to prevent damage to the electronic device 1.

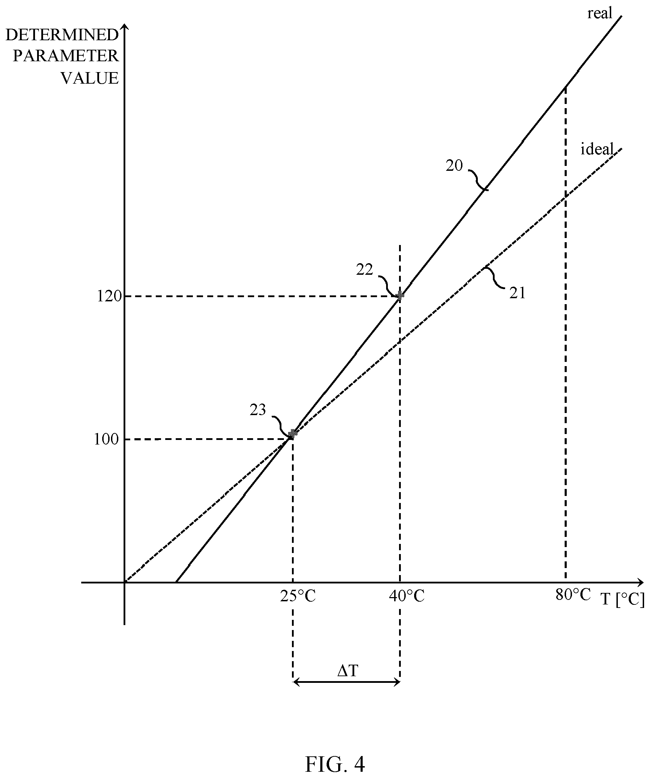

In a specific example, also illustrated in fig. 3, the second temperature $T_2$ corresponds to 85 °C. Fig. 3 shows the first calibration point 32 at the first temperature $T_1$ and the second calibration point 33 at the temperature $T_2$. Fig. 4 illustrates the calibration method for calibrating the temperature sensor 10 of the electronic device 1.

The embodiment uses two points, including the first calibration point 32 (first point) and the second calibration point 33 (second point) for determining the gain error. Using the two points enables determining the equation of a line equation. Determining the line equation requires calculating an offset and calculating the gradient (slope, pitch).

The temperature T2 for the second point may be computed based on the known power loss in the electronic device 1, the predetermined time Δt (time duration, calibration interval), and a thermal resistance of the electronic device 2, e.g. the thermal resistance of the electronic device 1 that is soldered onto a printed circuit board PCB. Therefore, the first and second points in the example of fig. 4 are

First calibration point 32:    $T = T_1 = 25\,°C$;    measured value: 100;

Second calibration point 33:    $T = T_2 = 40\,°C$;    measured value: 120;

The self-heating of the electronic device 1 may be determined using an exemplary reference device of a same type as the electronic device 1.

An electronic device 1 is of a same type as another electronic device 1, when it has a corresponding layout, comprises corresponding structural elements and exhibits same or corresponding electric, mechanical and thermal characteristics in a corresponding environment.

A manufacturer may therefore characterize the electronic devices 1 of a same type of electronic devices 1 by using one or a sample of plural electronic devices 1 as reference device(s).

The determined self-heating of the reference device may then be used to deduce the self-heating of other electronic devices based on the self-heating of the reference electronic device.

The exemplary values of fig. 4 provide the gradient a of the line equation

$$y = a \times \Delta T + b; \tag{4}$$

with the gradient a, the offset b, the temperature $\Delta T$, and the measured parameter value y

$$a = \frac{y - b}{\Delta T} = \frac{120 - 100}{40 - 25}\frac{1}{°C} = 1.33\,\frac{1}{°C}; \tag{5}$$

Using the known method, the gradient a is assumed to be $a_{NOMINAL} = 1$, the offset b = 75, and the measured value is 160; Based on equation (4),

$$y = a \times \Delta T + b = 1 \times \Delta T + 75; \tag{6}$$

the temperature T corresponding to the measured value of 160 is then estimated to be

$$T = 85\,°C; \tag{7}$$

Using the method according to the embodiment, the gradient $a = 1.33\,\frac{1}{°C}$, the offset b = 75, and the measured value 160 are used in equation (4):

$$y = a \times \Delta T + b = 1.33\,\frac{1}{°C} \times \Delta T + 75; \tag{8}$$

$$T = 63.9\,°C; \tag{9}$$

From (7) and (9), a temperature error $T_{ERROR}$ between the known method and the method according to the embodiment is computed as

$$T_{ERROR} = 85\,°C - 63.9\,°C = 20.9\,°C \approx 21\,°C; \tag{10}$$

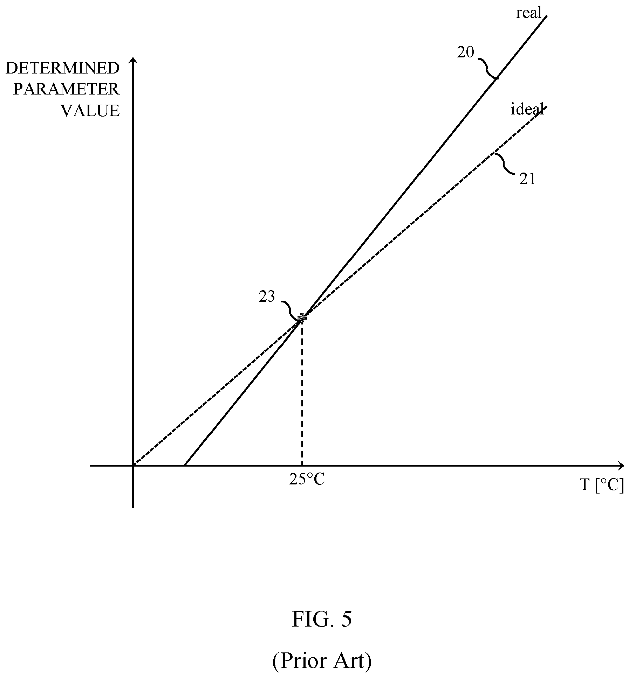

Fig. 5 illustrates a calibration method for calibrating the temperature sensor 10 according to a known method from prior art.

Current electronic devices 1, which have a temperature control functionality and include a temperature sensor 10, perform the following steps for measuring the temperature T:

The temperature sensor 10 generates and outputs an analogue voltage signal, whose current voltage value depends linearly on a current temperature.

The temperature sensor 10 provides the generated analogue voltage signal to analogue-to-digital (AD) converter, which generates a digital voltage signal based on the analogue voltage signal and outputs the digital voltage signal to a logic circuitry for further processing.

The logic circuitry may use stored calibration data for calibrating the digital voltage signal in order to determine a corrected digital temperature signal.

The calibration data has been computed at a specific for a specific temperature T and takes a particular offset for the temperature T into account.

The logic circuitry may compare the corrected digital temperature signal with a temperature threshold. In case, the corrected digital temperature signal exceeds the temperature threshold the logic circuitry may shut down the electronic device in order to avoid operating the electronic device at operating temperatures, which exceed the operational temperature ranges specified for the electronic device. Operating the electronic device at operating temperatures outside its defined operational temperature ranges may result in potentially damaging or destructive effects on at least one of the electronic device or other electronic devices interacting with the electronic device.

It is evident that the conventional method for calibrating the temperature sensor 10 based on a determined offset error at a single calibration point 23 provides temperature values of certain accuracy for determined parameter values, which are close to the determined parameter value corresponding to the temperature T of the calibration point 23.

Nevertheless, due to the neglected gain error, a real curve 20 for the correspondence between the determined parameter values and the temperature values provides a difference between to the ideal curve 21 for the correspondence between the determined parameter values and the temperature values, that increases with an increasing distance to the of the determined parameter values and the corresponding temperature values.

Electronic devices 1 with the temperature sensor 10 may, for example comprise integrated control circuits (ICs), including application specific integrated circuits (ASICs) or microcontroller circuits ($\mu$Cs). The integrated circuits may form part of light driver devices, in particular of light driver devices implemented in a switched mode power supply topology (SMPS) for generating and outputting a LED current for one or a plurality of lighting modules.

Regarding electronic circuit design, carefully monitoring the temperature in order to ensure safety and protect systems and users from harm may be an important requirement.

Temperature monitoring implies measuring temperatures and may not only include just measuring system temperature or environmental temperature (ambient temperature) conditions but also to compensate for other temperature-sensitive components and maintain both sensor and system accuracy. Accurate temperature monitoring can increase system performance and reduce cost by removing the need to overdesign systems to compensate for inaccurate temperature measurements. A reduction in cost may be achieved equally in a design phase of the electronic device 1 and for manufacturing the electronic device 1. There are different considerations required when choosing the most efficient type of temperature sensor 10 for a particular application, the considerations may include sensor accuracy, sensor size, sensor location in the electronic device, sensor drift, and, last but not least, sensor calibration.

Sensor accuracy represents how close the temperature measured and provided by the temperature sensor 10 is to the true value of the temperature. Factors such as linearity of the temperature sensor 10 and availability of acquisition circuits across the operating temperature range of the electronic device 1 have to regarded.

Developing embedded systems drives a constant need for higher performance and adding even more features to electronic devices 1 with a smaller form factor. This requires system designers to monitor the overall temperature to ensure safety and protect the electronic devices 1 realizing embedded systems.

Monitoring the ambient temperature enables to maintain tight control of environmental conditions or ensuring safe operating conditions for the electronic device 1. High ambient temperatures may cause overheating that leads to a hardware damage or reduced system efficiency.

PCBs often integrate temperature monitoring of mounted components. For PCBs, temperature monitoring supports maintaining component safety, reliability and performance. High temperatures can cause hardware damage and electrical hazards, decrease device efficiency and life span. High temperatures may originate from multiple sources, including heat-generating components mounted directly on the PCB or inadequate device ventilation.

Arranging temperature sensors 10 with a small form factor near heat sources on the PCB improves measurement accuracy. Reliable and repeatable calibration processes enable achieving a high accuracy of the temperature measurements over wide temperature ranges and over an extended lifespan of the electronic device 1.

**Claims**

1. Calibration method for a temperature sensor of an electronic device (1), wherein the electronic device (1) comprises

   a temperature sensor (10), an electronic circuit (11) configured to emit a predetermined amount of heat, and a control circuit (17),
   the method comprising steps of
   determining (Si) a first parameter value of a parameter of the electronic device (1) that is representative for a first temperature of the electronic device (1);
   controlling (S2, S3), by the control circuit (17), the electronic circuit (11) to emit the predetermined amount of heat for a predetermined time;
   determining (S4) a second parameter value of a parameter of the electronic device (1) that is representative for a second temperature of the electronic device (1) after the predetermined time has elapsed,
   calculating (S5), by the control circuit (17) a gradient based on the determined first parameter value, the determined second parameter value, the first temperature and the second temperature, and
   determining (S6) a gain error based on the calculated gradient.

2. The calibration method according to claim 1, wherein the calibration method further comprises

   controlling the electronic circuit (11) of a representative electronic device (1) of a same type of the electronic device (1) at the first temperature to emit the predetermined amount of heat for the predetermined time, and determining for the representative electronic device (1), the second temperature after the predetermined time elapsed.

3. The calibration method according to claim 2, wherein the calibration method further comprises
   storing, in the control circuit (17) of the electronic device (1), the determined second temperature determined for the representative electronic device (1).

4. The calibration method according to any one of the preceding claims, wherein the calibration method further comprises at least one of

   determining the predetermined time based on the second temperature having a predetermined first minimum temperature difference to the first temperature, determining the predetermined time based on the second temperature being within a predetermined second minimum distance to a maximum rated temperature of the electronic device, and
   determining the predetermined time based on the second temperature corresponding to a predetermined temperature threshold for a preventive shutdown of the electronic device.

5. The calibration method according to any one of the preceding claims, wherein the calibration method is performed during or immediately after manufacturing the electronic device (1).

6. The calibration method according to any one of the preceding claims, wherein the calibration method is performed repeatedly in predetermined time intervals.

7. The calibration method according to any one of the preceding claims, wherein the calibration method is performed when switching the electronic device (1) on.

8. The calibration method according to any one of the preceding claims, wherein the calibration method further comprises
   controlling (S2), by the control circuit (17), a switch (3) to connect an output (4) of a voltage regulator circuit (11) of the electronic circuit (11) via a load resistor (2) to ground for the predetermined time.

9. The calibration method according to any one of claims 1 or 2, wherein the calibration method further comprises determining (S7) an offset error based on the first parameter value.

10. The calibration method according to claims 9, wherein the calibration method further comprises
    storing (S8) the determined offset error in a memory of the electronic device (1).

11. The calibration method according to any one of the preceding claims, wherein the calibration method further comprises
   storing (S8) the determined gain error in a memory of the electronic device (1).

12. Computer program comprising instructions, which, when a computer or microprocessor executes the program, cause the computer or microprocessor to carry out the method of any one of claims 1 to 11.

13. Electronic device, wherein the electronic device comprises

   a temperature sensor (10) configured to output a parameter value that corresponds to a current temperature value of a temperature of the electronic device;
   an electronic circuit (11) configured to emit a predetermined amount of heat;
   a control circuit (17) configured to determine a first parameter value of a parameter of the electronic device that is representative for a first temperature of the electronic device;
   to control the electronic circuit (S3) to emit the predetermined amount of heat for a predetermined time,
   to determine a second parameter value of a parameter of the electronic device that is representative for a second temperature of the electronic device after the predetermined time has elapsed,
   to calculate a gradient based on the determined first parameter value, the determined second parameter value, the first temperature and the second temperature, and
   to compute a gain error based on the calculated gradient.

14. The electronic device according to claim 13, wherein the electronic circuit (11) is a linear voltage regulator circuit for low voltage power supply.

15. The electronic device according to claim 13 or 14, wherein the electronic device (1) is an integrated circuit, in particular an application specific integrated circuit ASIC.

16. System comprising the electronic device (1) according to any one of claims 13 to 15, wherein the system further comprises

   a load resistor (2), and
   a switch (3) configured to connect an output (4) of the electronic device (1) via the load resistor (2) to ground (9) and to disconnect the output (4) of the electronic device (1) from ground (9),
   wherein the control circuit (17) is configured to control the switch (3) to connect the output electronic device (1) via the load resistor (3) to ground (9) for a predetermined time.

17. Driver device for building infrastructure devices, in particular for lighting modules, wherein the driver device comprises

   at least one electronic device (1) according to one of claims 13 to 15, or
   at least one system (1, 2, 3) according to claim 16.

START

DETERMING PARAMETER
VALUE
(FIRST PARAMETER VALUE) — S1

CONNECTING ELECTRONIC
DEVICE WITH LOAD
RESISTANCE — S2

WAITING UNTIL
PREDETERMINED TIME
HAS ELAPSED — S3

DETERMINING PARAMETER
VALUE
(SECOND PARAMETER VALUE) — S4

CALCULATING GRADIENT — S5

CALCULATING GAIN ERROR — S6

DETERMINING OFFSET ERROR — S7

STORING DETERMINED
ERROR(S) — S8

END

FIG. 1

EP 4 372 342 A1

FIG. 2

FIG. 3

FIG. 4

FIG. 5

(Prior Art)

Europäisches
Patentamt

European
Patent Office

Office européen
des brevets

# EUROPEAN SEARCH REPORT

Application Number

EP 22 20 7466

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/355033 A1 (ZHANG JUNMOU [US] ET AL) 10 December 2015 (2015-12-10) * abstract * * figures 1-14 * * paragraphs [0014] - [0048] * ----- | 1-17 | INV. G01K3/00 G01K7/01 G01K15/00 |
| A | US 2018/217009 A1 (YOUSEFZADEH BAHMAN [NL] ET AL) 2 August 2018 (2018-08-02) * abstract * * figures 1-6 * * paragraphs [0060] - [0066] * ----- | 1-17 | |

TECHNICAL FIELDS
SEARCHED      (IPC)

G01K

The present search report has been drawn up for all claims

| Place of search | Date of completion of the search | Examiner |
|---|---|---|
| The Hague | 15 May 2023 | Totò, Nicola |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 20 7466

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2023

| Patent document cited in search report | | Publication date | Patent family member(s) | Publication date |
|---|---|---|---|---|
| US 2015355033 | A1 | 10-12-2015 | BR 112016028619 A2 | 22-08-2017 |
| | | | CN 106461470 A | 22-02-2017 |
| | | | EP 3152538 A1 | 12-04-2017 |
| | | | JP 6374036 B2 | 15-08-2018 |
| | | | JP 2017517736 A | 29-06-2017 |
| | | | KR 20170012293 A | 02-02-2017 |
| | | | US 2015355033 A1 | 10-12-2015 |
| | | | WO 2015191251 A1 | 17-12-2015 |
| US 2018217009 | A1 | 02-08-2018 | NONE | |

EPO FORM P0459

For more details about this annex : see Official Journal of the European Patent Office, No. 12/82